# EUROPÄISCHE PATENTSCHRIFT

(11) **EP 2 683 322 B1**
(45) Veröffentlichungstag und Bekanntmachung des Hinweises auf die Patenterteilung: **16.03.2016**
(21) Anmeldenummer: 12732945.6
(22) Anmeldetag: 19.06.2012
(51) Int. Cl.: A61C 13/00, B23Q 1/25

(54) **AUFSPANNVORRICHTUNG**
CLAMPING DEVICE
DISPOSITIF DE SERRAGE

(30) Priorität: 10.08.2011 DE 102011109939
(43) Veröffentlichungstag der Anmeldung: 15.01.2014
(73) Patentinhaber: Amann Girrbach AG, 6842 Koblach (AT)
(72) Erfinder: KOCH, Timo, A-6974 Gaissau (AT)
(74) Vertreter: Fechner, Thomas
(86) Internationale Anmeldenummer: PCT/AT2012/000172
(87) Internationale Veröffentlichungsnummer: WO 2013/020147

(56) Entgegenhaltungen:
- DE-A1-102009 011 676

## Beschreibung

Die vorliegende Erfindung betrifft eine Aufspannvorrichtung für eine Bearbeitungsmaschine zur spanabhebenden Bearbeitung zumindest eines dentalen Werkstücks, wobei die Aufspannvorrichtung zumindest einen Werkstückträger zur Aufnahme des dentalen Werkstücks während der Bearbeitung aufweist, wobei an dem Werkstückträger zumindest ein Werkzeughalter zum Halten zumindest eines, vorzugsweise mehrerer, spanabhebender Werkzeuge zur spanabhebenden Bearbeitung des dentalen Werkstücks angeordnet ist.

Aufspannvorrichtungen sind in verschiedenen Ausführungsformen bekannt. Die WO 2009/100863 A2 zeigt z. B. eine Aufspannvorrichtung bei der zwei Ringe relativ zu einander schwenkbar angeordnet sind, wobei in dem inneren Ring ein plattenförmiger Werkstückträger befestigt werden kann und das zu bearbeitende dentale Werkstück in einer Durchtrittsöffnung des Werkstückträgers umfangsgeschlossen gehalten ist.

Die verschiedenen, beim heutigen Stand der Technik zu bearbeitenden dentalen Werkstücke bestehen aus unterschiedlichen Materialien. Dies ist ein erster Grund warum eine Bearbeitungsmaschine zur spanabhebenden Bearbeitung solcher dentaler Werkstücke nicht nur ein Werkzeug sondern in der Regel mehrere Werkzeuge benötigt. Ein zweiter Grund für die Notwendigkeit der Verwendung verschiedener Werkzeuge besteht auch in den unterschiedlichen Dimensionen und Genauigkeiten, mit denen mit dem jeweiligen Werkzeug gearbeitet werden kann. Um die Bearbeitungsmaschine mit verschiedenen Werkzeugen zur spanabhebenden Bearbeitung des zentralen Werkstücks betreiben zu können, schlägt die WO 2009/100863 in Fig. 4 vor, die Bearbeitungsmaschine mit mehreren, jeweils ein Werkzeug tragenden und antreibenden Werkzeugträgerköpfen auszurüsten. Dies ist allerdings sehr aufwändig.

Die DE 10 2009 011 676 A1 schlägt eine gattungsgemäße Lösung vor, bei der mehrere Werkzeuge zwangsgekoppelt am Werkstückhalter angeordnet werden. Der Werkstückhalter ist dabei Teil des Werkstücksystems und mit dem bewegbaren Werkstückschlitten im Wesentlichen fix verbunden.

Aufgabe der Erfindung ist es, einen alternativen Lösungsvorschlag vorzulegen, wie man an der Bearbeitungsmaschine verschiedene Werkzeuge in einer einfachen und schnellen Art und Weise zur Verfügung stellen kann.

Erfindungsgemäß wird dies durch eine Aufspannvorrichtung der oben genannten Art gelöst, bei der vorgesehen ist, dass der Werkstückträger und der Werkzeughalter gemeinsam als ein Bauteil auswechselbar mittels einer, vorzugsweise werkzeuglos, zerstörungsfrei lösbaren Befestigungseinrichtung an einem Träger der Aufspannvorrichtung befestigt oder befestigbar sind.

Mit anderen Worten ist es somit eine Grundidee der Erfindung, dass der Werkstückträger mit integriertem Werkzeughalter auswechselbar an dem Träger der Aufspannvorrichtung befestigt werden kann und auch gegen ein anderes Bauteil, vorzugsweise mit Werkstückträger und Werkzeughalter, ausgetauscht werden kann. Dieser Grundidee der Erfindung liegt auch die Überlegung zugrunde, dass in der Regel gewisse Arten von Werkstückträgern für Werkstücke aus bestimmten Materialien vorgesehen sind, welche mit einem bestimmten Satz von Werkzeugen bearbeitet werden müssen. Dieser Satz von Werkzeugen kann bei der Erfindung an dem Werkzeughalter, welcher zusammen mit dem Werkstückträger ein gemeinsames Bauteil bildet, gehalten sein. Dies hat zur Folge, dass man der Bearbeitungsmaschine bei der Montage eines bestimmten Werkstückträgers am Träger der Aufspannvorrichtung auch gleich den richtigen, am Werkzeughalter gehaltenen Satz von Werkzeugen zur Verfügung stellt. Besonders günstig ist es in diesem Zusammenhang, wenn die Befestigungseinrichtung vom Endnutzer der Aufspannvorrichtung bedienbar und/oder erreichbar ist. Die Befestigungseinrichtung sollte in diesem Sinne so angeordnet sein, dass der Endbenutzer der Aufspannvorrichtung diese bedienen kann, ohne dass die Aufspannvorrichtung oder die gesamte Bearbeitungsmaschine zerlegt oder auseinandergebaut werden muss. Günstigerweise ist in diesem Zusammenhang vorgesehen, dass der Werkzeughalter am Werkstückträger fix angeordnet ist.

Bei der, vorzugsweise werkzeuglos, zerstörungsfrei lösbaren Befestigungseinrichtung kann es sich z.B. um eine Rastverbindung und/oder ein Schnellspannsystem handeln. Andere Beispiele von geeigneten Befestigungseinrichtungen sind entsprechend fest haltende Stecksysteme, Bajonettverschlüsse o. dgl.. Der Begriff werkzeuglos bedeutet in diesem Zusammenhang, dass die Betätigung der Befestigungseinrichtung zum Lösen und miteinander Verbinden des gemeinsamen, den Werkstückträger und den Werkzeughalter aufweisenden Bauteils mit dem Träger bzw. von dem Träger vorzugsweise ohne die Verwendung von zusätzlichen Hilfsmitteln wie z.B. Schraubenziehern oder Schraubenschlüsseln direkt von Hand möglich ist. Im Sinne der Erfindung kann aber auch die Betätigung der Befestigungseinrichtung mittels Werkzeug vorgesehen sein. Der Begriff der zerstörungsfreien Lösbarkeit ist dahingehend auszulegen, dass die Befestigungseinrichtung für ein vielfaches Lösen und wieder Verbinden ausgelegt ist. Die Befestigung und das Lösen also praktisch beliebig oft durchgeführt werden können, ohne dass es dabei zu einer Zerstörung der Befestigungseinrichtung oder anderer Bauteile kommt.

Vorteile der Erfindung bestehen darin, dass auf den jeweiligen Bedarf abgestimmte, am Werkzeughalter gehaltene Werkzeuge und Werkstückträger bereitgestellt werden und auf diese Art auch gewährleistet wird, dass sowohl der Werkstückträger mit dem Werkstück als auch die Werkzeuge in einer für die Bearbeitungsmaschine genau bekannten und definierten Position angeordnet werden können. Dies ermöglicht sowohl die lagerichtige Positionierung der zu bearbeitenden dentalen Werkstücke in der Aufspannvorrichtung und damit auch in der Bearbeitungsmaschine als auch eine Möglichkeit, die Werkzeuge für die Bearbeitungsmaschine und insbesondere deren Werkzeugträgerkopf in eine anfahrbare Position zu bringen.

Grundsätzlich sei darauf hinwiesen, dass erfindungsgemäße Aufspannvorrichtungen und auch Bearbeitungsmaschinen zur spanabhebenden Bearbeitung unterschiedlichster dentaler Werkstücke eingesetzt werden können. Es kann sich hier um Rohlinge bzw. Vorprodukte wie z. B. Keramik-, Metall- oder Zirkonblöcke handeln. Als dentale Werkstücke können aber auch Halbfertigprodukte wie bereits teilweise bearbeitete Prothesen, Teilprothesen o. dgl. weiter bearbeitet werden. Bei den dentalen Werkstücken kann es sich aber auch um Hilfsgerüste oder Träger handeln, welche bei der Produktion von dentalen Prothesen oder Teilprothesen benötigt werden.

Der Begriff der spanabhebenden Bearbeitung ist an sich bekannt. Vorrangig handelt es sich dabei um Fräs- und/oder Bohrvorgänge. Es können aber auch andere spanabhebende Bearbeitungen mit entsprechenden Werkzeugen durchgeführt werden.

Der Werkstückträger ist das Bauteil, welches zur Aufnahme des zu bearbeitenden dentalen Werkstücks vorgesehen ist. Das dentale Werkstück kann direkt oder indirekt z. B. unter Zwischenschaltung eines Rahmens am Werkstückträger gehalten sein bzw. befestigt werden. Bevorzugte Ausgestaltungsformen der Erfindung sehen vor, dass der Werkstückträger gemeinsam mit dem Werkzeughalter, vorzugsweise motorisch, um eine, vorzugsweise erste, Achse drehbar am Träger gelagert ist. Beim Träger kann vorgesehen sein, dass er ein um eine, vorzugsweise zweite und von der ersten Achse verschiedene, Achse, vorzugsweise motorisch, drehbar gelagerter Tragarm ist. Im Sinne einer guten Zugänglichkeit zum zu bearbeitenden dentalen Werkstück ist günstigerweise vorgesehen, dass der Werkstückträger und der Werkzeughalter gemeinsam seitlich am Tragarm gelagert sind.

Bei dem Werkzeughalter handelt es sich günstigerweise um eine Art Lager für gerade während des aktuell durchgeführten Bearbeitungsvorgangs nicht benötigte Werkzeuge. Werkzeuge können grundsätzlich alle zur spanabhebenden Bearbeitung des dentalen Werkstücks geeigneten Werkzeuge sein. Vorrangig handelt es sich hierbei um Fräs- oder Bohrköpfe. Der Werkzeughalter weist zum Halten der gerade nicht benötigten Werkzeuge günstigerweise eine oder mehrere Werkzeugaufnahmen auf. Dies sind vorgegebene bzw. definierte Plätze des Werkzeughalters, an denen bestimmte Werkzeuge in definierter Art und Weise abgelegt werden können.

Es ist günstig, wenn das spanabhebende Werkzeug an einer Werkzeugaufnahme des Werkzeughalters oder die spanabhebenden Werkzeuge an Werkzeugaufnahmen des Werkzeughalters, vorzugsweise magnetisch oder mittels einer Rastverbindung, lösbar gehalten bzw. aufgenommen ist bzw. sind. Alternativ zum Magnet und zur Rastverbindung sind auch andere formschlüssige oder reibschlüssige Arten der Befestigung der Werkzeuge in den Werkzeugaufnahmen des Werkzeughalters denkbar. Die Art der Befestigung sollte einerseits das Werkzeug entsprechend fest am Werkzeughalter halten, andererseits aber auch dem Abnehmen eines Werkzeugs vom Werkzeughalter mittels des Werkzeugträgerkopfes der Bearbeitungsmaschine nicht im Weg stehen.

Im Gegensatz zum Werkzeughalter, welcher die beim aktuellen Bearbeitungsvorgang nicht benötigten Werkzeuge trägt, handelt es sich beim Werkzeugträgerkopf um das Bauteil einer Bearbeitungsmaschine, welches das spanabhebende Werkzeug während der spanabhebenden Bearbeitung des Werkstücks aufnimmt, antreibt und positioniert. Der Werkzeugträgerkopf ist günstigerweise in zumindest eine, besser zwei, besonders bevorzugt drei Raumrichtungen bewegbar, sodass er an unterschiedlichen Stellen das im Werkstückträger der Aufspannvorrichtung gehaltene, zu bearbeitende dentale Werkstück mit dem Werkzeug anfahren kann.

Damit der Werkzeugträgerkopf automatisiert Werkzeuge vom Werkzeughalter abnehmen, dort wieder hinbringen bzw. einen Werkzeugwechsel durchführen kann, ist es günstig, wenn der Werkzeughalter eine oder mehrere Werkzeugaufnahmen zur Aufnahme jeweils eines spanabhebenden Werkzeugs und die Aufspannvorrichtung eine Erkennungseinrichtung zur Überprüfung, ob ein spanabhebendes Werkzeug und/oder welches spanabhebende Werkzeug in der oder den jeweiligen Werkzeugaufnahmen vorhanden ist, aufweist. Die Erkennungseinrichtung kann also je nach Ausbildungsform zum einen erkennen, ob an der entsprechenden Stelle bzw. an der entsprechenden Werkzeugaufnahme des Werkzeughalters überhaupt ein Werkzeug vorhanden ist oder nicht. Besonders bevorzugte Ausgestaltungsformen können aber auch erkennen, welche Art von Werkzeug an der entsprechenden Stelle bzw. in der entsprechenden Werkzeugaufnahme des Werkzeughalters vorhanden ist. Die Funktionsweisen von geeigneten Erkennungseinrichtungen sind beim Stand der Technik an sich bekannt. Es kann sich z.B. um Leseeinrichtungen für elektrische, elektromagnetische, magnetische, mechanische oder optisch lesbare Codierungen, welche dann günstigerweise an jedem Werkzeug angebracht sind um dies zu individualisieren, handeln. Zu nennen sind in diesem Zusammenhang auch Leseeinrichtungen für Transponder, RFID, Strichcode, Mikrochip und dergleichen.

Neben der Aufspannvorrichtung an sich betrifft die Erfindung auch Bearbeitungsmaschine zur spanabhebenden Bearbeitung zumindest eines dentalen Werkstücks mit zumindest einer erfindungsgemäßen Aufspannvorrichtung. Bei einer solchen Bearbeitungsmaschine ist günstigerweise vorgesehen, dass sie ein Gehäuse mit einem während der spanabhebenden Bearbeitung des dentalen Werkstücks, vorzugsweise vollständig, verschließbaren Bearbeitungshohlraum aufweist, wobei die Befestigungseinrichtung, vorzugsweise vom Endnutzer der Aufspannvorrichtung bedienbar und/oder erreichbar, im Bearbeitungshohlraum angeordnet ist bzw. sind. Weiters ist günstigerweise vorgesehen, dass die Bearbeitungsvorrichtung zusätzlich zur Aufspannvorrichtung auch zumindest einen Werkzeugträgerkopf, welcher zumindest eines der spanabhebenden Werkzeuge zur spanabhebenden Bearbeitung des Werkstückes aufnimmt und antreibt, aufweist, wobei der Werkzeugträgerkopf zum Werkzeugwechsel ein spanabhebendes Werkzeug am Werkzeughalter abgeben und ein anderes spanabhebendes Werkzeug vom Werkzeughalter aufnehmen kann. Weiters ist günstigerweise vorgesehen, dass die Bearbeitungsmaschine eine computergesteuerte Bearbeitungsmaschine ist. Die Drehung des Werkstückträgers um die erste Achse und die Drehung des Tragarms um die zweite Achse und gegebenenfalls auch die Bewegung des Werkzeugträgerkopfes und/oder des Werkzeuges sind bei diesen Ausgestaltungsformen günstigerweise computergesteuert durchführbar. Ein entsprechender Steuercomputer kann in die Bearbeitungsmaschine integriert sein oder mit dieser zur Ansteuerung der Bearbeitungsmaschine verbunden werden.

Weitere Merkmale und Einzelheiten bevorzugter Ausgestaltungsformen der Erfindung werden in der nachfolgenden Figurenbeschreibung anhand verschiedener Figuren zu einem erfindungsgemäßen Ausführungsbeispiel einer Bearbeitungsmaschine mit einer entsprechenden Aufspannvorrichtung erläutert. Es zeigen:
Fig. 1 eine erste perspektivische Ansicht auf eine erfindungsgemäße Bearbeitungsmaschine zur spanabhebenden Bearbeitung zumindest eines dentalen Werkstücks mit einer entsprechenden erfindungsgemäßen Aufspannvorrichtung;
Fig. 2 eine zweite perspektivische Ansicht dieser Bearbeitungsmaschine;
Fig. 3 eine ansonsten zu Fig. 2 analoge Ansicht, wobei allerdings das den Werkstückträger und den Werkzeughalter bildende Bauteil vom Träger der Aufspannvorrichtung gelöst ist;
Fig. 4 die erfindungsgemäße Aufspannvorrichtung dieser Bearbeitungsmaschine zusammen mit dem Werkzeugträgerkopf dieser Bearbeitungsmaschine unter Weglassung der anderen Bauteile der Bearbeitungsmaschine und
Fig. 5 eine Ansicht der erfindungsgemäßen Aufspannvorrichtung, wobei das den Werkzeugträger und den Werkzeughalter bildende Bauteil vom Tragarm gelöst ist;
Fig. 6 die Aufspannvorrichtung an der mittels der zerstörungsfrei lösbaren Befestigungseinrichtung ein anderes Bauteil bestehend aus Werkstückträger und Werkzeughalter befestigt ist;
Fig. 7 die Bearbeitungsmaschine mit einer zur trockenen Bearbeitung vorgesehenen Saugglocke;
Fig. 8 die Saugglocke aus Fig. 7 in vergrößerter Darstellung und
Fig. 9 die Bearbeitungsmaschine des Ausführungsbeispiels mit einem Saugschlauch zur Reinigung insbesondere des Bearbeitungshohlraums vor und oder nach der spanabhebenden Bearbeitung des dentalen Werkstücks.

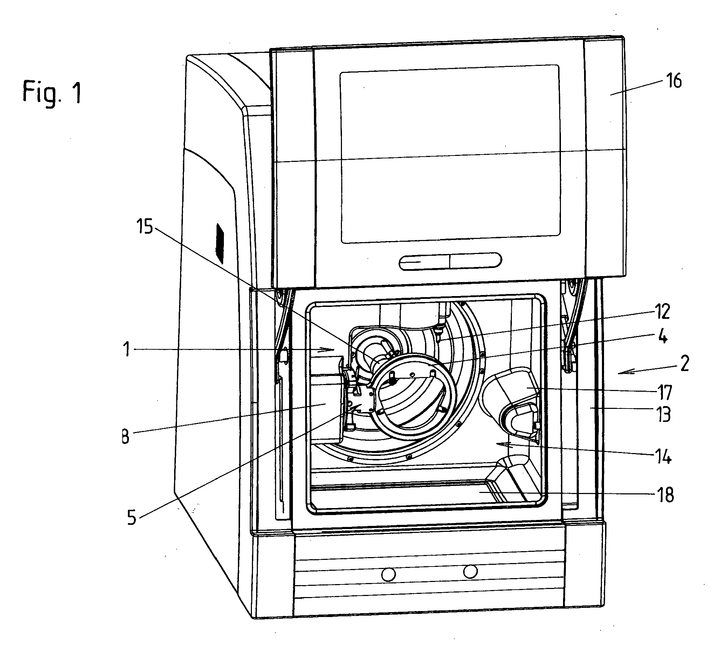

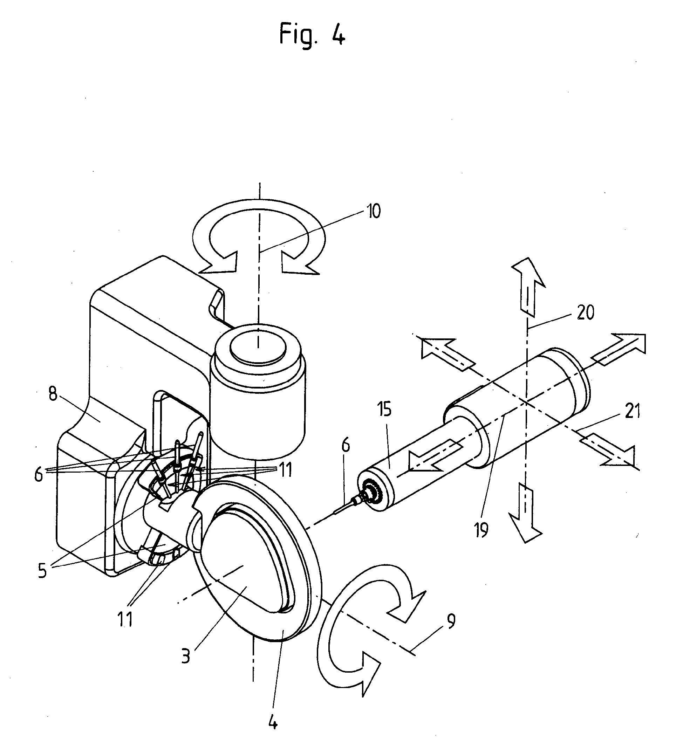

Die in den Fig. dargestellte Bearbeitungsmaschine 2 weist ein Gehäuse 13 mit darin angeordnetem Bearbeitungshohlraum 14 auf. Im Bearbeitungshohlraum 14 wird das zu bearbeitende dentale Werkstück 3 während der spanabhebenden Bearbeitung angeordnet. Es ist mittels der Aufspannvorrichtung 1 während der spanabhebenden Bearbeitung im Bearbeitungshohlraum 14 gehalten und kann mittels der Aufspannvorrichtung 1 auch zur Bearbeitung in definierte Positionen relativ zum Werkzeugträgerkopf 15 bzw. dem an ihm für den jeweiligen Bearbeitungsschritt gerade angeordneten Werkzeug 6 positioniert werden. Das in Fig. 1 nicht dargestellte spanabhebend zu bearbeitende dentale Werkstück 3 wird unmittelbar oder mittelbar z. B. durch Zwischenschaltung eines, das dentale Werkstück umgebenden Rahmens am Werkstückträger 4 angeordnet. Erfindungsgemäß bilden der Werkstückträger 4 und der Werkzeughalter 5 ein gemeinsames Bauteil, welches auswechselbar mittels der, vorzugsweise werkzeuglos, zerstörungsfrei lösbaren Befestigungseinrichtung 7 an einem Träger der Aufspannvorrichtung 1 befestigt oder befestigbar ist. Im gezeigten Ausführungsbeispiel handelt es sich beim Träger der Aufspannvorrichtung 1 um den Tragarm 8. An diesem ist das durch den Werkstückträger 4 und den Werkzeughalter 5 gebildete Bauteil, vorzugsweise motorisch, um eine vorzugsweise erste Achse 9 drehbar gelagert. Der hier als Tragarm 8 ausgeführte Träger ist wiederum günstigerweise um eine, vorzugsweise zweite und von der ersten Achse 9 verschiedene, Achse 10, vorzugsweise motorisch, drehbar gelagert. Fig. 4 veranschaulicht unter Weglassung der anderen Bauteile der Bearbeitungsmaschine 2 die möglichen Bewegungsrichtungen und damit Freiheitsgrade der Aufspannvorrichtung 1 und des Werkzeugträgerkopfes 15. So ist der Träger bzw. Tragarm 8, vorzugsweise ausschließlich, um die zweite Achse 10 drehbar. Der gekrümmte Doppelpfeil veranschaulicht die beiden möglichen, einander entgegengesetzten Drehrichtungen des Tragarms 8. Der Drehwinkel kann 360° und mehr betragen. Es ist aber genauso gut möglich, diesen Drehwinkel um die zweite Achse 10 auf einen kleineren Winkelbereich zu beschränken. Günstigerweise ist die Drehung um die Achse 10 die einzige Bewegungsmöglichkeit des Tragarms 8. Der in Fig. 4 ein dentales Werkstück 3 in Form eines Rohlings tragende Werkstückträger 4 ist um die erste Achse 9 drehbar am Tragarm 8 gelagert. Der Doppelpfeil zeigt wiederum die beiden entgegengesetzten Drehrichtungen um die Drehachse 9. Durch die einstückige Ausbildung von Werkstückträger 4 und Werkzeughalter 5 als ein gemeinsames Bauteil werden Werkzeughalter 5 und Werkstückträger 4 gemeinsam um die Achse 9 gedreht.

In Fig. 4 sind zwei freie Werkzeugaufnahmen 11, also Plätze zum Anordnen eines Werkzeugs 6 am Werkzeughalter 5 und drei mittels Werkzeugen 6 besetzte Werkzeugaufnahmen 11 des Werkzeughalters 5 dargestellt. Die vorzugsweise als Fräs- oder Bohrköpfe ausgeführten Werkzeuge 6 können dabei so ausgewählt werden, dass am jeweiligen Werkzeughalter 5 genau diejenigen Werkzeuge 6 gehalten sind, welche zu der Bearbeitung des im Werkstückträger 4 befestigten dentalen Werkstück 3 geeignet sind und benötigt werden. Eines der Werkzeuge 6 ist für den momentan anfallenden Bearbeitungsvorgang am Werkzeugträgerkopf 15 montiert. Das Auswechseln der Werkzeuge 6 erfolgt günstigerweise automatisiert, indem der Werkzeugträgerkopf 15 das entsprechende Werkzeug 6 vom Werkzeughalter 5 abholt. Der Werkzeughalter 5 kann dabei gemeinsam mit dem Werkstückträger 4 in eine Position gedreht werden, sodass das jeweils momentan benötigte Werkzeug 6 vom Werkzeugträgerkopf 15 aufgenommen werden kann. Für das Abgeben eines gerade nicht mehr benötigten Werkzeugs 6 an der entsprechenden Werkzeugaufnahme 11 des Werkzeughalters 5 gilt das Entsprechende. Das Aufnehmen und das Ablegen und damit auch das Wechseln der Werkzeuge 6 am Werkzeugträgerkopf 15 erfolgt günstigerweise vollautomatisiert. Damit die Steuerung der Verarbeitungsmaschine bzw. Aufspannvorrichtung 1 erkennt, ob ein Werkzeug 6 und/oder welches Werkzeug 6 an der jeweiligen Werkzeugaufnahme 11 angeordnet ist, ist günstigerweise die bereits Eingangs genannte Erkennungseinrichtung 12 vorgesehen. Diese kann, wie eingangs bereits erläutert, arbeiten, um das Vorhandensein und/oder die Art des jeweils an einer Werkzeugaufnahme 11 angeordneten Werkzeugs 6 zu erkennen.

In Fig. 4 ist auch dargestellt, dass, wie bevorzugt vorgesehen, der Werkzeugträgerkopf 15 in diesem Ausführungsbeispiel in drei zueinander orthogonalen Richtungen 19, 20 und 21 bewegbar ist. Die jeweiligen Pfeile zeigen die möglichen Bewegungsrichtungen vor, zurück, seitlich, hoch und nach unten an. Mit den in Fig. 4 dargestellten insgesamt fünf Bewegungsachsen ist es möglich, das dentale Werkstück 3 an jeder beliebigen Stelle unter dem gewünschten Winkel zu bearbeiten. Im Sinne einer guten Zugänglichkeit des am Werkstückträger 4 befestigten Werkstücks 3 ist es günstig, wenn der Werkstückträger 4 um die erste Achse 9 drehbar, vorzugsweise seitlich, an dem Tragarm 8 der Ausspannvorrichtung 1 gelagert ist und der Tragarm 8 um die zweite Achse 10 drehbar gelagert ist. Die jeweiligen Drehbewegungen um die jeweiligen Achsen 9 und 10 können dabei die einzigen Drehbewegungsmöglichkeiten vom Tragarm 8 und Werkzeugträger 4 sein. Es kann vorgesehen sein, dass die drehbare Lagerung des Werkstückträgers 4, vorzugsweise seitlich, am Tragarm 8 die einzige tragende Befestigung des Werkstückträgers 4 ist. Mit anderen Worten kann vorgesehen sein, dass der Werkstückträger 4 ausschließlich einseitig und/oder nur über eine einzige Verbindung am Tragarm 8 gelagert ist. Günstig ist es in diesem Zusammenhang, wenn der Tragarm 8 in sich gebogen und/oder abgewinkelt oder, wie hier realisiert, L-förmig ausgebildet ist. Der Werkstückträger 4 kann, wie in diesem Ausführungsbeispiel realisiert, in einem ersten Endbereich des Tragarms 8 an diesem, vorzugsweise seitlich, um die erste Achse 9 drehbar gelagert sein. Der Tragarm 8 kann weiters in einem zweiten Endbereich des Tragarms 8 drehbar um die zweite Achse 10 z.B. am Gehäuse 13 der Bearbeitungsmaschine 2 gelagert sein. Wie hier auch realisiert, können die erste Achse 9 und/oder die zweite Achse 10 bzw. ihre gedachten Verlängerungen durch den Werkstückaufnahmebereich des Werkstückträgers 4, welcher zur Aufnahme des dentalen Werkstücks 3 vorgesehen ist, verlaufen.

Zurückkommend auf die Fig. 1 bis 3 ist darauf hinzuweisen, dass der Bearbeitungshohlraum 14, in dem günstigerweise sowohl die Aufspannvorrichtung 1 als auch der Werkzeugträgerkopf 15 bewegbar angeordnet sind, während der Bearbeitung des zu bearbeitenden dentalen Werkstücks 3 günstigerweise verschlossen werden kann. Es kann sich hierbei um eine staub- und/oder flüssigkeitsdichte Art des Verschlusses handeln. Für diese Verschlussmöglichkeit ist im gezeigten Ausführungsbeispiel die klappbare Verschlussklappe 16 vorgesehen. Die benötigte Abdichtung kann über entsprechende, beim Stand der Technik bekannte Dichtungsringe u. dgl. erzielt werden. Der Vollständigkeit halber wird darauf hingewiesen, dass die Bewegung der Aufspannvorrichtung 1 und des Werkzeugträgerkopfes 15 günstigerweise motorisch bzw. motorbetrieben durchgeführt wird. Die Ansteuerung erfolgt günstigerweise mittels Computer. Wie bereits Eingangs erläutert, handelt es sich bei der Bearbeitungsmaschine 2 günstigerweise um eine computergesteuerte Bearbeitungsmaschine.

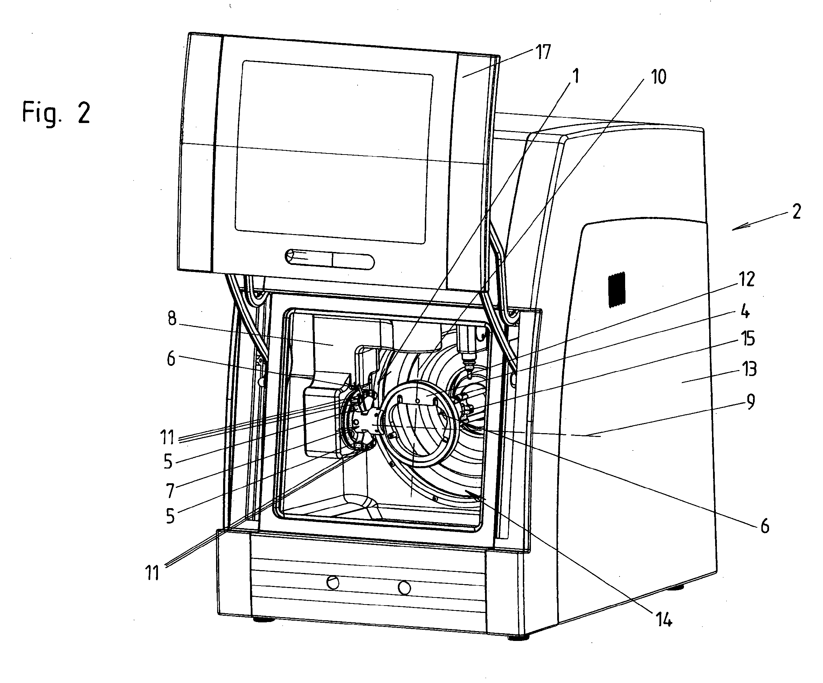

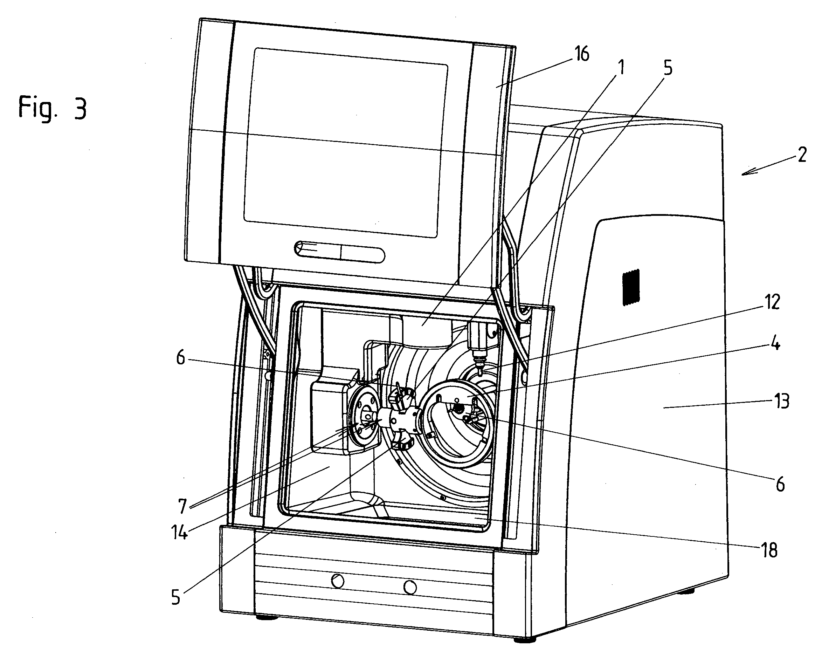

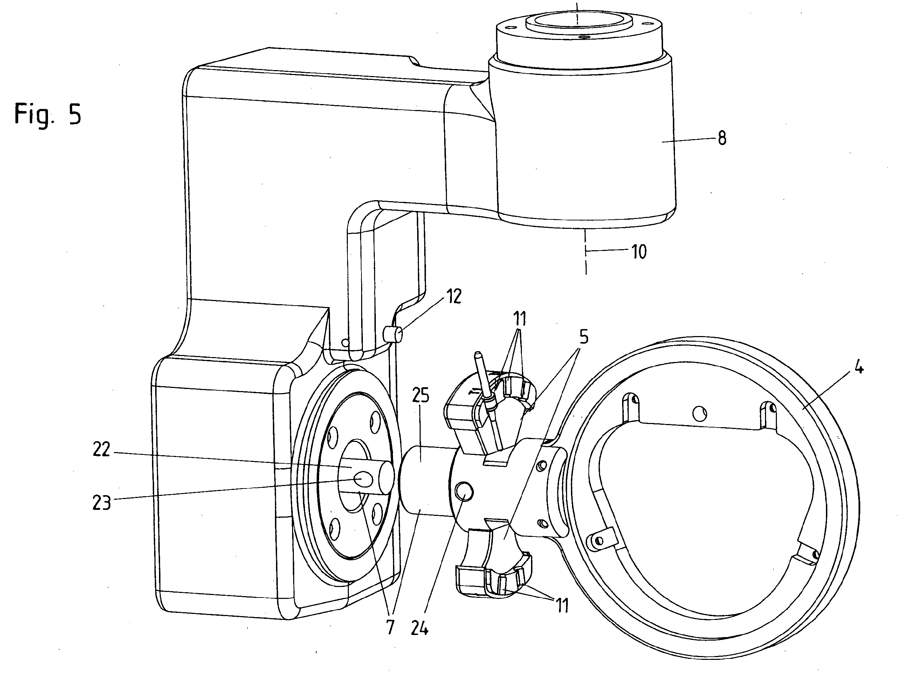

In den Fig. 1 und 2 ist das gemeinsame Bauteil, welches sowohl den Werkstückträger 4 als auch den Werkzeughalter 5 umfasst, mittels der Befestigungseinrichtung 7 am Tragarm 8 befestigt. Dies ist die Betriebsstellung, in der dieses gemeinsame Bauteil um die Achse 9 drehbar und gemeinsam mit dem Tragarm 8 um die Achse 10 drehbar ist. Soll nun ein anderes Werkstück bearbeitet werden, so werden der Werkstückträger 4 und der Werkzeughalter 5 gemeinsam durch Lösen der, vorzugsweise werkzeuglos, zerstörungsfrei lösbaren Befestigungseinrichtung 7 vom Tragarm 8 abgenommen und durch eine andere Einheit, z.B. bestehend aus einem anderen Werkstückträger 4 mit entsprechendem Werkzeughalter 5 und entsprechend daran angeordneten Werkzeugen 6, ersetzt. Fig. 3 und Fig. 5 zeigen noch einmal vergrößert das Bauteil bestehend aus Werkstückträger 4 und Werkzeughalter 5 losgelöst vom Tragarm 8. Im gezeigten Ausführungsbeispiel ist, wie besonders gut in den Fig. 3 und 5 zu sehen, die zerstörungsfrei lösbare Befestigungseinrichtung 7 durch einen um die Achse 9 drehbaren Bolzen 22 am Tragarm 8 und eine dazu passende Bolzenaufnahme 25 am gemeinsamen Bauteil des Werkstückträgers 4 und des Werkzeughalters 5 sowie durch einen hier nicht gezeigten Verbindungsbolzen gebildet. Der Verbindungsbolzen kann, sofern das Bauteil bestehend aus Werkstückträger 4 und Werkzeughalter 5 ausreichend weit auf den Tragarm 8 aufgesteckt ist, durch die Durchstecköffnungen 23 und 24 in Bolzen 22 und Bolzenaufnahme 25 hindurchgesteckt oder in diese eingeschraubt werden, womit die benötigte Arretierung zur spanabhebenden Bearbeitung erreicht ist. Der Verbindungsbolzen kann z.B. als konischer Bolzen mit oder ohne Gewinde ausgebildet sein. Er kann zur Betätigung ein Anschlussstück, wie z.B. einen Schraubenzieherschlitz, einen Außenmehrkant oder einen Innensechskant, aufweisen, wobei am Anschlussstück ein Werkzeug, wie z.B. ein Schraubenzieher, ein Schraubenschlüssel, ein Innensechskantschlüssel oder ein Drehmomentschlüssel, zur Betätigung angebracht werden kann. Im Sinne einer werkzeuglosen Betätigung der Befestigungseinrichtung 7 kann der Verbindungsbolzen aber auch mit einem direkt von Hand, also werkzeuglos betätigbaren Griffelement versehen sein.

Soll das gemeinsame Bauteil durch ein anderes gemeinsames Bauteil mit einem anderen Werkstückträger 4 und Werkzeughalter 5 ersetzt werden, so ist der Verbindungsbolzen herauszuziehen, das gemeinsame Bauteil vom Tragarm 8 abzuziehen um dann ein anderes gemeinsames Bauteil entsprechend am Tragarm 8 zu befestigen.

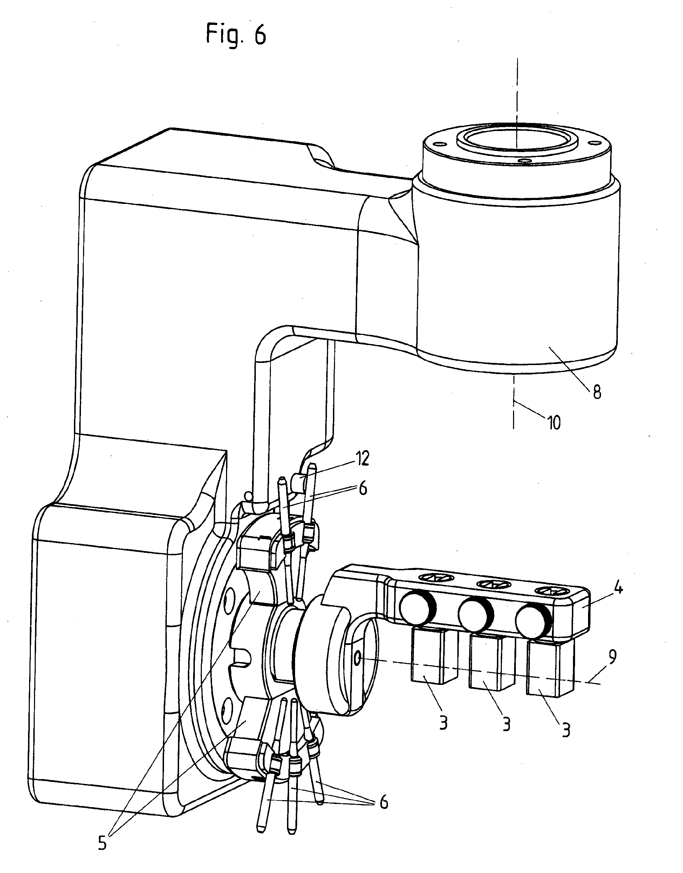

Fig. 6 zeigt beispielhaft ein anderes Bauteil mit einem anderen Werkzeugträger 4 und einem anderen Werkzeughalter 5 mit entsprechend auf die hier zu bearbeitenden dentalen Werkstücke 3 abgestimmten Werkzeugen 6. Der Formgebung der Werkstückträger 4 ist, wie am Vergleich der Fig. 5 und 6 veranschaulicht, an sich kaum Grenzen gesetzt. Es kann sich um, das dentale Werkstück 3 in einer Ebene vollständig umfassende bzw. umgreifende Werkstückträger 4 wie in Fig. 5, aber beispielsweise auch um, die Werkstücke 3 nur seitlich haltende Werkstückträger 4 wie in Fig. 6 handeln. Auch andere Ausgestaltungsformen wie C-förmige Bügel u. dgl. sind für die Werkstückträger 4 denkbar.

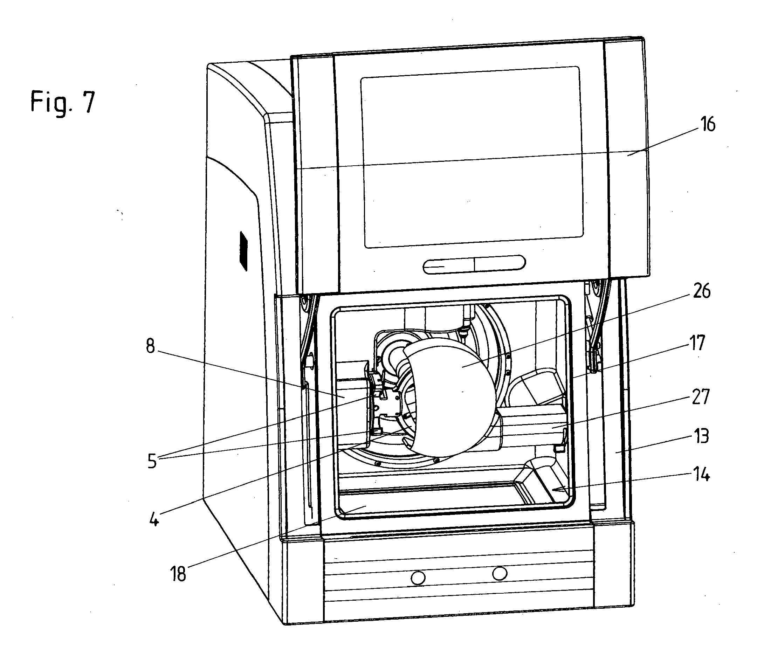

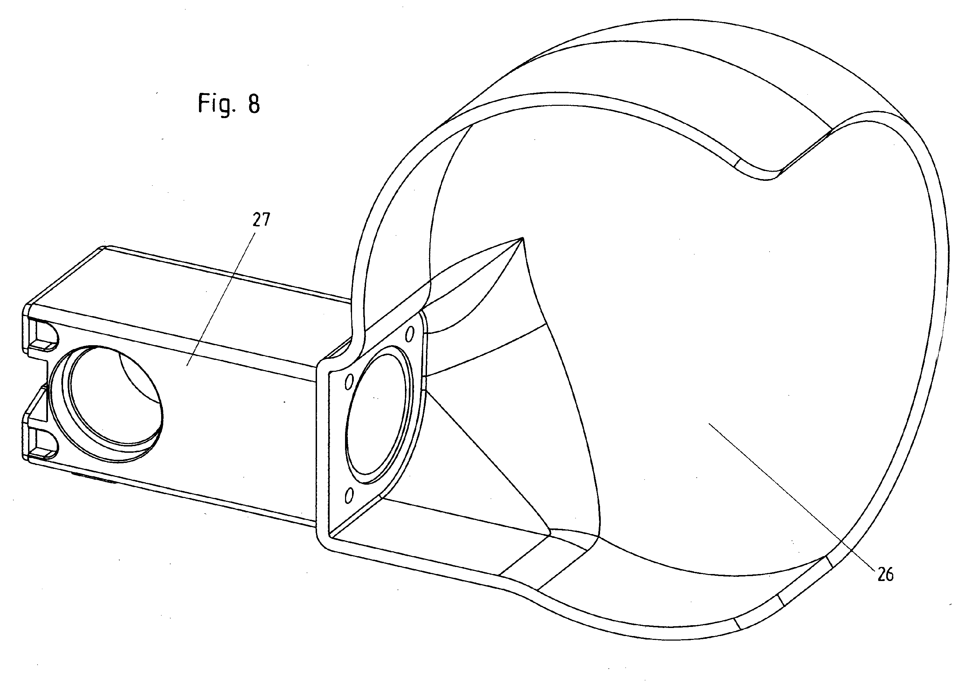

Erfindungsgemäß ausgebildete Bearbeitungsmaschinen 2 können für die trockene, spanabhebende Bearbeitung von dentalen Werkstücken 3, aber auch für die spanabhebende Nassbearbeitung der dentalen Werkstücke 3 vorgesehen sein. Im gezeigten Ausführungsbeispiel handelt es sich um eine bevorzugte Ausgestaltungsform, die sowohl für die trockene als auch für die nasse Bearbeitung von dentalen Werkstücken 3 geeignet ist. Zur trockenen Bearbeitung weist die Bearbeitungsmaschine 2 des gezeigten Ausführungsbeispiels eine Absaugung 17 auf. An diese kann bei der trockenen Bearbeitung des dentalen Werkstücks die, in Fig. 7 montiert und in Fig. 8 losgelöst dargestellte Absaugglocke 26 angeschlossen werden. Diese ist günstigerweise lösbar an der Luftabsaugung 17 im Bearbeitungshohlraum 14 befestig- und anordenbar. Die Verbindung der Absaugglocke 26 mit der Absaugung 17 erfolgt im gezeigten Ausführungsbeispiel über den Anschlussstutzen 27. Zusätzlich zur geschilderten Absaugung können bei der trockenen Bearbeitung noch Luftdüsen z. B. am Werkzeugträgerkopf 15 vorgesehen sein, mit denen das zum jeweiligen Bearbeitungsschritt eingesetzte Werkzeug 6 gekühlt und/oder mit denen auch der gerade bearbeitete Bereich des dentalen Werkstücks 3 freigeblasen werden kann, sodass durch die spanabhebende Bearbeitung entstehender Staub und Späne vom zu bearbeitenden Werkstück 3 abgeblasen und von der Absaugung abgesaugt werden. Die Luftdüsen können natürlich auch separat, also nicht direkt am Werkzeugträgerkopf 15 angeordnet sein und sind hier nicht dargestellt.

Für die Nassbearbeitung weist die Bearbeitungsmaschine 2 einen, günstigerweise geschlossen, ausgeführten Kühlmittelkreislauf für eine entsprechende Kühlflüssigkeit auf. Hierbei können beliebige, beim Stand der Technik bekannte und geeignete Kühlmittel zum Einsatz kommen. Zum Transport des Kühlmittels im Kühlmittelkreislauf werden an sich bekannte Pumpen und Rohrleitungen eingesetzt. Günstig ist es, wenn über entsprechende Düsen, wiederum vorzugsweise am Werkzeugträgerkopf 15 oder auch anderweitig angeordnet, das Kühlmittel bzw. die Spülflüssigkeit auf das zu bearbeitende Werkstück 3 und/oder auf das beim momentanen Bearbeitungsvorgang eingesetzte Werkzeug 6 aufgespritzt wird. Zum Auffangen des Kühl bzw. Spülmittels wird im gezeigten Ausführungsbeispiel die Auffangschale 18 vorgesehen, aus der das Kühl- bzw. Spülmittel dann wiederum abgepumpt wird. Sowohl bei der trockenen als auch bei der nassen Bearbeitung können entsprechende Filter vorgesehen sein, um die durch die spanabhebende Bearbeitung abgetragenen Späne und Feststoffpartikel aus dem Kühl- bzw. Spülmittelkreislauf bzw. aus der abgesaugten Luft abzuscheiden.

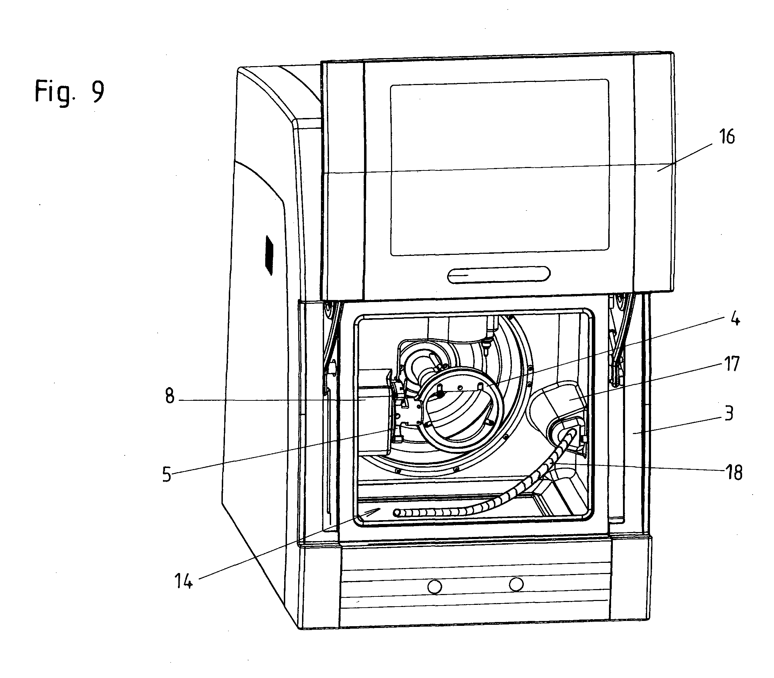

Um den Bearbeitungshohlraum 14 und/oder alle darin angeordneten Bauteile der Aufspannvorrichtung 1 und/oder der Bearbeitungsmaschine 2 vor, während oder nach dem Bearbeitungsvorgang reinigen zu können, sehen bevorzugte Ausgestaltungsformen vor, dass, wie in Fig. 9 beispielhaft gezeigt, ein Absaugschlauch 18 an der Luftabsaugung 17 angeschlossen werden kann. Dieser Absaugschlauch 18 ist günstigerweise so lang und flexibel ausgebildet, dass er als eine Art Staubsauger im Bearbeitungshohlraum 14 und gegebenenfalls auch außerhalb eingesetzt werden kann. Der Schlauch 18 kann günstigerweise wie auch die Absaugglocke 26, vorzugsweise werkzeuglos, lösbar an der Luftabsaugung 17 befestigt werden. Hier sind bevorzugt Klemm-, Rast- oder andere -verbindungen der geeigneten Art vorgesehen.

### Legende

### zu den Hinweisziffern:

- 1: Aufspannvorrichtung
- 2: Bearbeitungsmaschine
- 3: dentales Werkstück
- 4: Werkstückträger
- 5: Werkzeughalter
- 6: Werkzeug
- 7: Befestigungseinrichtung
- 8: Tragarm
- 9: erste Achse
- 10: zweite Achse
- 11: Werkzeugaufnahme
- 12: Erkennungseinrichtung
- 13: Gehäuse
- 14: Bearbeitungshohlraum
- 15: Werkzeugträgerkopf
- 16: Verschlussklappe
- 17: Luftabsaugung
- 18: Auffangschale
- 19: Bewegungseinrichtung
- 20: Bewegungseinrichtung
- 21: Bewegungseinrichtung
- 22: Bolzen
- 23: Durchstecköffnung
- 24: Durchstecköffnung
- 25: Bolzenaufnahme
- 26: Absaugglocke
- 27: Abschlussstutzen
- 28: Absaugschlauch

## Patentansprüche

1. Aufspannvorrichtung (1) für eine Bearbeitungsmaschine (2) zur spanabhebenden Bearbeitung zumindest eines dentalen Werkstücks (3), wobei die Aufspannvorrichtung (1) zumindest einen Werkstückträger (4) zur Aufnahme des dentalen Werkstücks (3) während der Bearbeitung aufweist, wobei an dem Werkstückträger (4) zumindest ein Werkzeughalter (5) zum Halten zumindest eines, vorzugsweise mehrerer, spanabhebender Werkzeuge (6) zur spanabhebenden Bearbeitung des dentalen Werkstücks (3) angeordnet ist, **dadurch gekennzeichnet, dass** der Werkstückträger (4) und der Werkzeughalter (5) gemeinsam als ein Bauteil auswechselbar mittels einer zerstörungsfrei lösbaren Befestigungseinrichtung (7) an einem Träger der Aufspannvorrichtung (1) befestigt oder befestigbar sind.

2. Aufspannvorrichtung (1) nach Anspruch 1, **dadurch gekennzeichnet, dass** die Befestigungseinrichtung (7) vom Endnutzer der Aufspannvorrichtung (1) bedienbar und/oder erreichbar ist.

3. Aufspannvorrichtung (1) nach Anspruch 1 oder 2, **dadurch gekennzeichnet, dass** der Werkstückträger (4) gemeinsam mit dem Werkzeughalter (5), vorzugsweise motorisch, um eine, vorzugsweise erste, Achse (9) drehbar am Träger gelagert ist.

4. Aufspannvorrichtung (1) nach einem der Ansprüche 1 bis 3, **dadurch gekennzeichnet, dass** der Träger ein, um eine, vorzugsweise zweite und von der ersten Achse (9) verschiedene, Achse (10), vorzugsweise motorisch, drehbar gelagerter Tragarm (8) ist.

5. Aufspannvorrichtung (1) nach Anspruch 4, **dadurch gekennzeichnet, dass** der Werkstückträger (4) und der Werkzeughalter (5) gemeinsam seitlich am Tragarm (8) gelagert sind.

6. Aufspannvorrichtung (1) nach einem der Ansprüche 1 bis 5, **dadurch gekennzeichnet, dass** das spanabhebende Werkzeug (6) an einer Werkzeugaufnahme (11) des Werkzeughalters (5) oder die spanabhebenden Werkzeuge (6) an Werkzeugaufnahmen (11) des Werkzeughalters (5), vorzugsweise magnetisch oder mittels einer Rastverbindung, lösbar gehalten bzw. aufgenommen ist bzw. sind.

7. Aufspannvorrichtung (1) nach einem der Ansprüche 1 bis 6, **dadurch gekennzeichnet, dass** der Werkzeughalter (5) eine oder mehrere Werkzeugaufnahmen (11) zur Aufnahme jeweils eines spanabhebenden Werkzeugs (6) und die Aufspannvorrichtung (1) eine Erkennungseinrichtung (12) zur Überprüfung, ob ein spanabhebendes Werkzeug (6) und/oder welches spanabhebende Werkzeug (6) in oder an der oder den jeweiligen Werkzeugaufnahmen (11) vorhanden ist, aufweist.

8. Aufspannvorrichtung (1) nach einem der Ansprüche 1 bis 7, **dadurch gekennzeichnet, dass** der Werkzeughalter (5) am Werkstückträger (4) fix angeordnet ist.

9. Bearbeitungsmaschine (2) zur spanabhebenden Bearbeitung zumindest eines dentalen Werkstücks (3) mit zumindest einer Aufspannvorrichtung (1) nach einem der Ansprüche 1 bis 8.

10. Bearbeitungsmaschine (2) nach Anspruch 9, **dadurch gekennzeichnet, dass** sie ein Gehäuse (13) mit einem während der spanabhebenden Bearbeitung des dentalen Werkstücks (3), vorzugsweise vollständig, verschließbaren Bearbeitungshohlraum (14) aufweist, wobei die Befestigungseinrichtung (7), vorzugsweise vom Endnutzer der Aufspannvorrichtung (1) bedienbar und/oder erreichbar, im Bearbeitungshohlraum (14) angeordnet ist bzw. sind.

11. Bearbeitungsmaschine (2) nach Anspruch 9 oder 10, **dadurch gekennzeichnet, dass** sie zumindest einen Werkzeugträgerkopf (15), welcher zumindest eines der spanabhebenden Werkzeuge (6) zur spanabhebenden Bearbeitung des Werkstücks (3) aufnimmt und antreibt, aufweist, wobei der Werkzeugträgerkopf (15) zum Werkzeugwechsel ein spanabhebendes Werkzeug (6) am Werkzeughalter (5) abgeben und ein anderes spanabhebendes Werkzeug (6) vom Werkzeughalter (5) aufnehmen kann.

## Claims

1. A clamping device (1) for a machine tool (2) for cutting machining of at least one dental workpiece (3), wherein the clamping device (1) has at least one workpiece carrier (4) for receiving the dental workpiece (3) during the machining, wherein at least one tool holder (5) for holding at least one, preferably a plurality of, cutting tools (6) for cutting machining of the dental workpiece (3) is arranged on the workpiece carrier (4), **characterised in that** the workpiece carrier (4) and the tool holder (5) are fastened or can be fastened jointly as one component exchangeably by means of a fastening means (7) which can be disengaged non-destructively on a carrier of the clamping device (1).

2. A clamping device (1) according to Claim 1, **characterised in that** the fastening means (7) can be operated and/or can be reached by the end user of the clamping device (1).

3. A clamping device (1) according to Claim 1 or 2, **characterised in that** the workpiece carrier (4) together with the tool holder (5) is mounted on the carrier rotatably, preferably in motor-driven manner, about a, preferably first, axis (9).

4. A clamping device (1) according to one of Claims 1 to 3, **characterised in that** the carrier is a supporting arm (8) which is mounted rotatably, preferably in motor-driven manner, about an axis (10), preferably a second axis which is different from the first axis (9).

5. A clamping device (1) according to Claim 4, **characterised in that** the workpiece carrier (4) and the tool holder (5) are jointly mounted laterally on the supporting arm (8).

6. A clamping device (1) according to one of Claims 1 to 5, **characterised in that** the cutting tool (6) is held or received on a tool holding fixture (11) of the tool holder (5), or the cutting tools (6) are held or received on tool holding fixtures (11) of the tool holder (5), preferably magnetically or by means of a latching connection, so that it or they can be disengaged.

7. A clamping device (1) according to one of Claims 1 to 6, **characterised in that** the tool holder (5) has one or more tool holding fixtures (11) for receiving in each case a cutting tool (6), and the clamping device (1) has a recognition means (12) for checking whether a cutting tool (6) and/or which cutting tool (6) is present in or on the respective tool holding fixture or fixtures (11).

8. A clamping device (1) according to one of Claims I to 7, **characterised in that** the tool holder (5) is arranged fixedly on the workpiece carrier (4).

9. A machine tool (2) for cutting machining of at least one dental workpiece (3) with at least one clamping device (1) according to one of Claims 1 to 8.

10. A machine tool (2) according to Claim 9, **characterised in that** it has a housing (13) with a machining cavity (14) which can be closed, preferably completely, during the cutting machining of the dental workpiece (3), the fastening means (7) being arranged in the machining cavity (14) so that it is able to be operated and/or reached, preferably by the end user of the clamping device (1).

11. A machine tool (2) according to Claim 9 or 10, **characterised in that** it has at least one tool carrier head (15) which receives and drives at least one of the cutting tools (6) for cutting machining of the workpiece (3), the tool carrier head (15), for changing tools, being able to deliver a cutting tool (6) to the tool holder (5) and being able to receive another cutting tool (6) from the tool holder (5).

## Revendications

1. Dispositif de serrage (1) pour une machine d'usinage (2) destinée à l'usinage par enlèvement de copeaux d'au moins une pièce dentaire (3), dans lequel le dispositif de serrage (1) présente au moins un porte-pièce (4) destiné à recevoir la pièce dentaire (3) pendant l'usinage, dans lequel au moins un porte-outil (5) destiné à tenir au moins un, de préférence plusieurs outils d'enlèvement de copeaux (6) pour l'usinage par enlèvement de copeaux de la pièce dentaire (3), est disposé sur le porte-pièce (4), **caractérisé en ce que** le porte-pièce (4) et le porte-outil (5) sont ou peuvent être fixés ensemble à un support du dispositif de serrage (1) en tant qu'un élément échangeable au moyen d'un dispositif de fixation (7) démontable sans destruction.

2. Dispositif de serrage (1) selon la revendication 1, **caractérisé en ce que** le dispositif de fixation (7) peut être manoeuvré et/ou atteint par l'utilisateur final du dispositif de serrage (1).

3. Dispositif de serrage (1) selon la revendication 1 ou 2, **caractérisé en ce que** le porte-pièce (4) est monté en commun avec le porte-outil (5), de façon rotative, de préférence avec un moteur, autour d'un, de préférence premier, axe (9).

4. Dispositif de serrage (1) selon l'une quelconque des revendications 1 à 3, **caractérisé en ce que** le support est un bras porteur (8) monté de façon rotative, de préférence avec un moteur, autour d'un axe (10), de préférence deuxième et différent du premier axe (9).

5. Dispositif de serrage (1) selon la revendication 4, **caractérisé en ce que** le porte-pièce (4) et le porte-outil (5) sont montés en commun latéralement sur le bras de support (8).

6. Dispositif de serrage (1) selon l'une quelconque des revendications 1 à 5, **caractérisé en ce que** l'outil d'enlèvement de copeaux (6) est maintenu ou logé de façon démontable dans un logement d'outil (11) du porte-outil (5) ou les outils d'enlèvement de copeaux (6) sont maintenus ou logés de façon démontable dans des logements d'outil (11) du porte-outil (5), et ce de préférence de façon magnétique ou par encliquetage.

7. Dispositif de serrage (1) selon l'une quelconque des revendications 1 à 6, **caractérisé en ce que** le porte-outil (5) présente un ou plusieurs logements d'outil (11) destinés à recevoir chaque fois un outil d'enlèvement de copeaux (6) et le dispositif de serrage (1) présente un dispositif de reconnaissance (12), pour vérifier si un outil d'enlèvement de copeaux (6) et/ou quel outil d'enlèvement de copeaux (6) est présent dans le/les ou au/aux logement(s) d'outil respectifs (11).

8. Dispositif de serrage (1) selon l'une quelconque des revendications 1 à 7, **caractérisé en ce que** le porte-outil (5) est disposé de façon fixe sur le porte-pièce (4).

9. Machine d'usinage (2) destinée à l'usinage par enlèvement de copeaux d'au moins une pièce dentaire (3) avec au moins un dispositif de serrage (1) selon l'une quelconque des revendications 1 à 8.

10. Machine d'usinage (2) selon la revendication 9, **caractérisée en ce qu'**elle présente un boîtier (13) avec une cavité d'usinage (14) pouvant être fermée, de préférence entièrement, pendant l'usinage par enlèvement de copeaux de la pièce dentaire (3), dans laquelle le dispositif de fixation (7) est disposé dans la cavité d'usinage (14), de préférence en pouvant être manoeuvré et/ou atteint par l'utilisateur final du dispositif de serrage (1).

11. Machine d'usinage (2) selon la revendication 9 ou 10, **caractérisée en ce qu'**elle présente au moins une tête porte-outil (15), qui comporte et entraîne au moins un des outils d'enlèvement de copeaux (6) pour l'usinage par enlèvement de copeaux de la pièce (3), dans laquelle la tête porte-outil (15) peut, pour le changement d'outil, céder un outil d'enlèvement de copeaux (6) au porte-outil (5) et reprendre un autre outil d'enlèvement de copeaux (6) du porte-outil (5).
